# EUROPÄISCHE PATENTANMELDUNG

(11) **EP 4 206 017 A1**
(43) Veröffentlichungstag der Anmeldung: **05.07.2023**
(21) Anmeldenummer: 22216626.6
(22) Anmeldetag: 23.12.2022
(51) Int. Cl.: B60K 15/05, B62D 25/24

(54) **ANTRIEBSVORRICHTUNG FÜR EINE FAHRZEUGKLAPPE**

(30) Priorität: 30.12.2021 DE 102021006490; 31.03.2022 DE 102022107707
(71) Anmelder: Valmet Automotive Oy, 23500 Uusikaupunki (FI)
(72) Erfinder: Hämmerling, Nils, 49082 Osnabrück (DE)
(74) Vertreter: Kronthaler, Schmidt & Coll.

(57) **Zusammenfassung**

Es wird eine Antriebsvorrichtung (6) für eine Fahrzeugklappe (4) beschrieben, mittels der eine Öffnung (5) einer Fahrzeugkarosserie verschließ- und freigebbar ist. Die Fahrzeugklappe (4) führt in Einbaulage der Antriebsvorrichtung (6) während einer Verstellung auf einer die Öffnung (5) verschließenden Position in Richtung einer die Öffnung freigebenden Position zunächst eine Hubbewegung in Fahrzeugquerrichtung (y) nach innen und anschließend eine kombinierte Verschiebe- und Drehbewegung innerhalb der Fahrzeugkarosserie (2) aus. Die nach innen öffnende Fahrzeugklappe (4) ist mittels einer Kombination aus einem Drehgelenkmechanismus (11) und einer Linearführung (10) verstellbar, wobei der Drehgelenkmechanismus (11) und ein Schlitten (12) der Linearführung (10) über eine Hebelanordnung (13) von einer Antriebseinheit (8) antreibbar sind.

## Beschreibung

Die Erfindung betrifft eine Antriebsvorrichtung für eine Fahrzeugklappe gemäß der im Oberbegriff des Patentanspruches 1 näher definierten Art.

Aus der DE 10 2017 212 397 A1 ist eine Verlagerungsmechanik für ein bewegliches Karosserieteil zum Abdecken eines Tank- und/oder eines Lademuldenbereiches eines Kraftfahrzeuges bekannt. Das bewegliche Karosserieteil stellt eine Klappe dar, die in eine den Lademuldenbereich vollständig freigebende Position gegenüber einem feststehenden Karosseriebereich absenkbar und unter den feststehenden Karosseriebereich verlagerbar ist. Zur Realisierung der Absenkbewegung der Klappe und anschließenden Verlagerungsbewegung unter den feststehenden Karosseriebereich ist eine Doppel-Kulissenführung vorgesehen, bei der eine erste Kulissenführung zur Absenkung der Klappe an einem Steuerschlitten angeordnet ist, welcher selbst entlang einer fahrzeugfesten Führungsbahn linear beweglich ist.

Diese bekannte Verlagerungsmechanik ist konstruktiv aufwendig, weist eine hohe Bauteilanzahl auf und erfordert einen hohen Montageaufwand sowie einen hohen Abdichtungsaufwand von Helixkabelkanälen, Gleitsteinführungen und Kulissen.

Die DE 44 40 814 A1 offenbart eine Tankklappe, die von einer Schließstellung in eine unterhalb der Fahrzeugkarosserie verbrachte Offenstellung überführbar ist. Hierzu sind an der Tankklappe angeordnete Führungselemente mit Führungsbolzen vorgesehen, die jeweils in einer Führungsbahn mit einem geraden und mit einem gekrümmten Führungsabschnitt aufgenommen sind. Der gekrümmte Führungsabschnitt sorgt für eine Hubbewegung, während der gerade Führungsabschnitt eine Verschiebebewegung bewirkt. Die Verstellbewegung wird beispielsweise über eine Stange, welche mit einem Übertragungsteil gekoppelt ist, und über einen zwischen dem Übertragungsteil und dem Führungselement angeordneten Koppelhebel auf die Tankklappe übertragen.

Diese Lösung ist aufgrund der linearen Verstellbewegung der Stange durch einen unerwünscht hohen Bauraumbedarf gekennzeichnet.

Aus der Praxis bekannte und bauraumgünstiger ausgeführte Verlagerungsmechanismen für Tankklappen und dergleichen nutzen oftmals sogenannte Steigekabel bzw. Zug-Druck-Seile, um die Tankklappen zwischen ihrem die Tanköffnung verschließenden Betriebszustand und ihrem die Tankmulde freigebenden Betriebszustand zu verlagern.

Eine Verschlussvorrichtung zum Verschließen einer Zugriffsöffnung in einer Kraftfahrzeugkarosserie mit einem Zug-Druck-Seil ist beispielsweise in der DE 10 2016 110 869 A1 beschrieben.

Bei Lösungen mit Steigekabeln bzw. mit Zug-Druck-Seilen ist es jedoch problematisch, wenn sich derartige Verlagerungsmechaniken auch im Nassbereich eines Fahrzeuges befinden. Dann ist ein unerwünscht hoher Dichtaufwand erforderlich, um ein Verschmutzen und/oder Vereisen der Steigekabel bzw. der Zug-Druck-Seile zu vermeiden. Zusätzlich werden Steigekabel beflockt, um Betriebsgeräusche zu reduzieren, die eine Qualitätsanmutung beeinträchtigen. Beflockte Steigekabel erfordern jedoch erhöhte Kräfte und Drehmomente, um die Steigekabel gegenüber gehäusefesten Führungen zu verschieben.

Aus der DE 20 2021 001 685 U1 ist eine Fahrzeugklappe mit zugeordneter Öffnungs- und Schließvorrichtung bekannt. Mittels der Öffnungs- und Schließvorrichtung ist eine Öffnung in einer Fahrzeugkontur freilegbar oder verschließbar. Innerhalb der Öffnung ist eine Schnittstelle vorgesehen, die mit Bezug zur Fahrzeugkontur in das Fahrzeuginnere zurückgesetzt angeordnet ist. Die Öffnungs- und Schließvorrichtung umfasst eine mit der Fahrzeugklappe verbundene Schiebe- und Schwenkvorrichtung. Die Schiebe- und Schwenkvorrichtung ist mit einem Zahnradgetriebe gekoppelt. Das Zahnradgetriebe ist mit einem hinsichtlich der Drehrichtung umsteuerbaren Aktuator formschlüssig verbunden. Mittels der antreibbaren Schiebe- und Schwenkvorrichtung ist eine Schiebebewegung der Fahrzeugklappe in Richtung Fahrzeuginneres oder umgekehrt oder in Richtung Fahrzeugkontur realisierbar. Mittels der antreibbaren Schiebe- und Schwenkvorrichtung ist auch eine Schwenkbewegung der Fahrzeugklappe um eine Achse realisierbar. Die Fahrzeugklappe ist in einen gegenüber der Fahrzeugkontur im Fahrzeuginneren zurückgesetzten Betriebszustand schwenkbar und in eine Öffnungsstellung bewegbar oder umgekehrt in Richtung einer Schließstellung zurück bewegbar.

Nachteilhafterweise ist die Öffnungs- und Schließvorrichtung durch einen hohen konstruktiven Aufwand gekennzeichnet und verursacht daher hohe Herstellkosten. Des Weiteren weist die Öffnungs- und Schließvorrichtung einen hohen Bauraumbedarf auf.

Es ist eine bevorzugte Aufgabe der erfindungsgemäßen Technologie, zumindest einen Nachteil von einer vorbekannten Lösung zu verringern oder zu beheben oder eine alternative Lösung vorzuschlagen. Es ist insbesondere eine bevorzugte Aufgabe der hier offenbarten Technologie, eine Antriebsvorrichtung für eine Fahrzeugklappe, mittels der eine Öffnung einer Fahrzeugkarosserie verschließ- und freigebbar ist, zur Verfügung zu stellen, die hinsichtlich mindestens eines der folgenden Faktoren verbessert ist: Herstellungszeit, Herstellungskosten, Komplexität der Herstellung, Montageaufwand, Bauraumausnutzung, Betriebssicherheit, Nachhaltigkeit, Bauteilzuverlässigkeit und Widerstandsfähigkeit gegenüber Umwelteinflüssen.

Die Aufgabe/n wird/werden gelöst mit einer Antriebsvorrichtung mit den Merkmalen des Patentanspruches 1. Die abhängigen Patentansprüche stellen bevorzugte Ausgestaltungen dar.

Es wird eine Antriebsvorrichtung für eine Fahrzeugklappe vorgeschlagen, mittels der eine Öffnung einer Fahrzeugkarosserie verschließ- und freigebbar ist. Dabei kann die Fahrzeugklappe für ein Fahrzeug, insbesondere ein elektrisch antreibbares Fahrzeug, mit einer Ladedose vorgesehen sein. Die Ladedose kann in der Öffnung der Fahrzeugkarosserie angeordnet sein. Dabei kann die Ladedose über die Öffnung in der Fahrzeugkarosserie zum Beladen einer Fahrzeugbatterie vorgesehen sein.

In Einbaulage der Antriebsvorrichtung führt die Fahrzeugklappe während einer Verstellung aus einer die Öffnung verschließenden Position in Richtung einer die Öffnung freigebenden Position zunächst eine Hubbewegung vorzugsweise in Fahrzeugquerrichtung nach innen und anschließend eine kombinierte Verschiebe- und Drehbewegung innerhalb der Fahrzeugkarosserie aus und gibt dabei die Öffnung frei.

Hierfür ist die nach innen öffnende Fahrzeugklappe mittels einer Kombination aus einem Drehgelenkmechanismus, insbesondere einem Viergelenk, und einer Linearführung verstellbar ausgeführt. Der Drehgelenkmechanismus und ein Schlitten der Linearführung sind über eine Hebelanordnung von einer Antriebseinheit antreibbar.

Durch die Kombination der Hebelanordnung mit der Linearführung und dem Drehgelenkmechanismus werden für die Verstellung der Fahrzeugklappe nicht wie bei aus der Praxis bekannten Lösungen Steigekabel, Gleitsteine oder Kulissenführungen benötigt, die die bekannten Nachteile verursachen. Des Weiteren ist die Antriebsvorrichtung deutlich weniger schmutzempfindlich und erfordert daher einen nur geringen Abdichtungsaufwand.

Darüber hinaus überlagert sich eine Hub- und Dreh-/Verschiebebewegung durch die Kombination des Drehgelenkmechanismus mit dem Schlitten der Linearführung derart, dass ein harmonischer Bewegungsablauf der Fahrzeugklappe sowohl während eines Öffnungsvorganges der Öffnung und auch während eines Schließvorganges der Öffnung entsteht.

Bei einer konstruktiv einfachen und mit geringen Betätigungskräften betreibbaren Ausführungsform der erfindungsgemäßen Antriebsvorrichtung umfasst die Hebelanordnung zumindest einen um eine stationäre Drehachse verschwenkbaren Antriebshebel. Der Antriebshebel kann in Koppelbereichen, die von der Drehachse beabstandet sind, mit wenigstens zwei Koppelhebeln der Hebelanordnung drehbar verbunden sein. Die Koppelhebel können zudem drehbar mit dem fahrzeugkarosserieseitig längsverschieblich geführten Schlitten und dem Drehgelenkmechanismus in Wirkverbindung stehen.

Der Schlitten und die Fahrzeugklappe können über zwei Gelenkhebel miteinander in Wirkverbindung stehen, die sowohl mit dem Schlitten als auch mit der Fahrzeugklappe drehbar verbunden sind. Dann ist die Fahrzeugklappe auf konstruktiv einfache Art und Weise bei gleichzeitig geringem Bauraumbedarf der Antriebsvorrichtung aus seiner die Öffnung verschließenden Position in Richtung der die Öffnung freigebenden Position und in umgekehrter Richtung verstellbar.

Die Bauteile, d. h. der Antriebshebel, die Koppelhebel, die Gelenkhebel und Abstände zwischen Koppelstellen zwischen den Bauteilen, dem Schlitten und der Fahrzeugklappe sind bei einer weiteren Ausführungsform der erfindungsgemäßen Antriebsvorrichtung dazu eingerichtet, dass die Fahrzeugklappe während einer Schwenkbewegung des Antriebshebels innerhalb eines Schwenkwinkelbereiches gegenüber der Fahrzeugkarosserie mit dem Schlitten die Hubbewegung ausführt. Des Weiteren sind die Bauteile, der Schlitten und die Fahrzeugklappe und die Koppelstellen zwischen den Bauteilen, dem Schlitten und der Fahrzeugklappe so eingerichtet, dass die Fahrzeugklappe innerhalb eines sich an den Schwenkwinkelbereich anschließenden weiteren Schwenkwinkelbereiches des Antriebshebels gegenüber der Fahrzeugkarosserie mittels der kombinierten Verschiebe- und Drehbewegung verstellt wird.

Der Schlitten kann entlang einer Führungsstange längsverschieblich geführt sein, die in Einbaulage der Antriebsvorrichtung in der Fahrzeugkarosserie im Wesentlichen senkrecht zum Öffnungsquerschnitt der Öffnung verlaufend angeordnet ist. Dann ist die Fahrzeugklappe mit geringem konstruktiven Aufwand bei gleichzeitig geringem Bauraumbedarf über die Hubbewegung und die kombinierte Verschiebe- und Drehbewegung zwischen ihrer Schließposition und ihrer Öffnungsposition verfahrbar.

Die Gelenkhebel können jeweils im Bereich eines Drehgelenkes mit der Fahrzeugklappe und mit dem Schlitten verbunden sein.

Bei einer bauraumgünstigen Ausführungsform der erfindungsgemäßen Antriebsvorrichtung ist einer der Gelenkhebel L-förmig ausgeführt. Der L-förmige Gelenkhebel kann einen ersten Gelenkhebelabschnitt und einen zweiten Gelenkhebelabschnitt aufweisen. Im Verbindungsbereich zwischen den Gelenkhebelabschnitten kann der L-förmige Gelenkhebel drehbar mit dem Schlitten verbunden sein. Zusätzlich kann der L-förmige Gelenkhebel in einem Koppelbereich des einen Gelenkhebelabschnittes, der vom Verbindungsbereich beabstandet ist, mit dem ersten Koppelhebel drehbar verbunden sein. Darüber hinaus kann der L-förmige Gelenkhebel in einem Koppelbereich des anderen Gelenkhebelabschnittes, der vom Verbindungsbereich beabstandet ist, mit der Fahrzeugklappe drehbar verbunden sein.

Die kombinierte Dreh- und Schiebebewegung der Fahrzeugklappe in Richtung der Position, in der die Fahrzeugklappe die Öffnung verschließt, kann durch einen Anschlag des Schlittens begrenzt sein, wobei der Anschlag mit einem der Gelenkhebel zusammenwirkt. Dann ist die Fahrzeugklappe mit geringem konstruktiven Aufwand positionsstabil in ihrer Schließposition.

Zusätzlich besteht die Möglichkeit, dass die kombinierte Dreh- und Schiebebewegung der Fahrzeugklappe in Richtung der Position, in der die Fahrzeugklappe die Öffnung freigibt, durch einen weiteren Anschlag des Schlittens freigegeben wird, wenn die Fahrzeugklappe und der Schlitten über einen definierten Hubweg aus der Position verstellt ist, in der die Fahrzeugklappe die Öffnung verschließt. Dann ist die Fahrzeugklappe wiederum auf konstruktiv einfache Art und Weise in ihre Öffnungsposition überführbar.

Bei einer weiteren bauraumgünstigen und konstruktiv einfachen sowie mit geringem Aufwand montierbaren Ausführungsform der erfindungsgemäßen Antriebsvorrichtung umfasst der Schlitten eine zylindrische Hülse, die die Führungsstange umgreift.

Bei einer vorteilhaften und einfachen Ausführung der Erfindung ist der Drehgelenkmechanismus als ein Viergelenk ausgebildet. In weiteren Ausführungen ist jedoch auch eine andere, z. B. Bauraumbedürfnissen angepasste Ausführung mit einer abweichenden Anzahl an Gelenken des Drehgelenkmechanismus, z. B. ein Siebengelenk, möglich.

Die Fahrzeugklappe kann auch zur Abdeckung unterschiedlicher Komponenten am Fahrzeug dienen, wobei sie sich in erster Linie zur Abdeckung einer Ladeschnittstelle eines Elektrofahrzeuges eignet.

Die Erfindung ist nicht auf die angegebene Kombination der Merkmale des unabhängigen Anspruches oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ein Ausführungsbeispiel der Erfindung wird, ohne hierauf beschränkt zu sein, anhand der Zeichnung näher erläutert.
Dabei zeigt:
- Fig. 1: eine vereinfachte dreidimensionale Ansicht eines Fahrzeuges mit einer Ladeschnittstelle, bei der eine Antriebsvorrichtung eine Fahrzeugklappe zum Verschließen und Freigeben einer Öffnung einer Fahrzeugkarosserie betätigt;
- Fig. 2: einen in Fig. 1 näher gekennzeichneten Bereich II in einer Seitenansicht und in einem Betriebszustand der Fahrzeugklappe, in der die Fahrzeugklappe die Öffnung der Fahrzeugkarosserie verschließt;
- Fig. 3: eine Fig. 2 entsprechende Darstellung der Fahrzeugklappe in einem Betriebszustand der Fahrzeugklappe, in dem die Fahrzeugklappe die Öffnung vollständig freigibt;
- Fig. 4: die Ladeschnittstelle, die Antriebsvorrichtung und die Fahrzeugklappe des Fahrzeuges gemäß Fig. 1 in einer Seitenansicht, wobei die Fahrzeugklappe in ihrer Schließstellung angeordnet ist;
- Fig. 5: eine Fig. 4 entsprechende Darstellung der Ladeschnittstelle, der Antriebsvorrichtung und der Fahrzeugklappe, wobei die Fahrzeugklappe durch eine Hubbewegung aus ihrer Schließstellung in Richtung ihrer Öffnungsstellung in eine Zwischenposition überführt ist; und
- Fig. 6: eine Fig. 4 entsprechende Darstellung der Ladeschnittstelle, der Antriebsvorrichtung und der Fahrzeugklappe, wobei die Fahrzeugklappe aus der in Fig. 5 dargestellten Zwischenposition in ihre Offenstellung überführt ist.

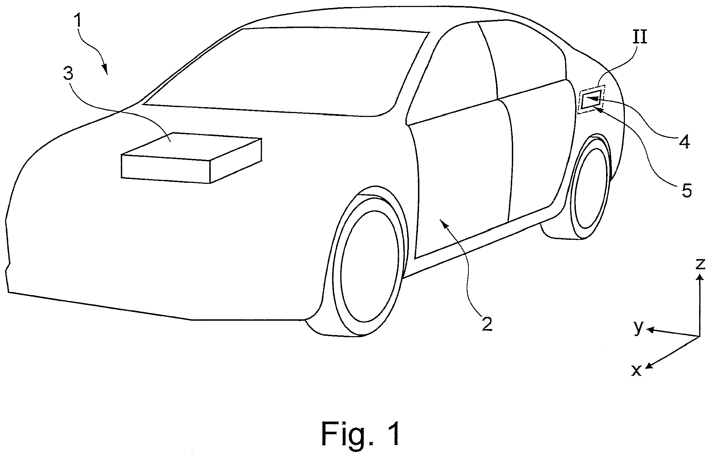

Bezug nehmend auf Fig. 1 ist ein Fahrzeug 1 mit einer Fahrzeugkarosserie 2 und einer Antriebseinrichtung 3 gezeigt, wobei die Antriebseinrichtung 3 wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Ladeschnittstelle zum Laden wenigstens einer Fahrzeugbatterie der Antriebseinrichtung 3 auf, von der die Antriebseinrichtung 3 mit elektrischer Energie für den elektrischen Antrieb des Fahrzeuges 1 versorgbar ist. Des Weiteren ist über die Fahrzeugbatterie auch während eines vorzugsweise generatorischen Betriebs der Antriebseinrichtung 3 elektrische Energie speicherbar. Die Ladeschnittstelle ist im Bereich einer Öffnung 5 der Fahrzeugkarosserie 2 angeordnet. Die Öffnung 5 stellt somit eine sogenannte Lademulde dar, durch die ein elektrisches Steckersystem mit einem entsprechenden Koppelelement bzw. einer Ladedose, die innerhalb der Fahrzeugkarosserie 2 unterhalb der Außenhaut des Fahrzeuges 1 angeordnet ist, in Wirkverbindung bringbar ist, um die Fahrzeugbatterie des Fahrzeuges 1 aufladen zu können oder von dieser Strom an eine externe Ladeeinrichtung abgeben zu können.

Zum Abdecken der Öffnung 5 im Nichtgebrauchszustand ist eine Fahrzeugklappe 4 vorgesehen, welche auch als Ladeklappe bezeichnet wird und im Wesentlichen als ein ebenes bzw. plattenartiges Element, eine sogenannte Blende, mit einem Träger ausgeführt ist.

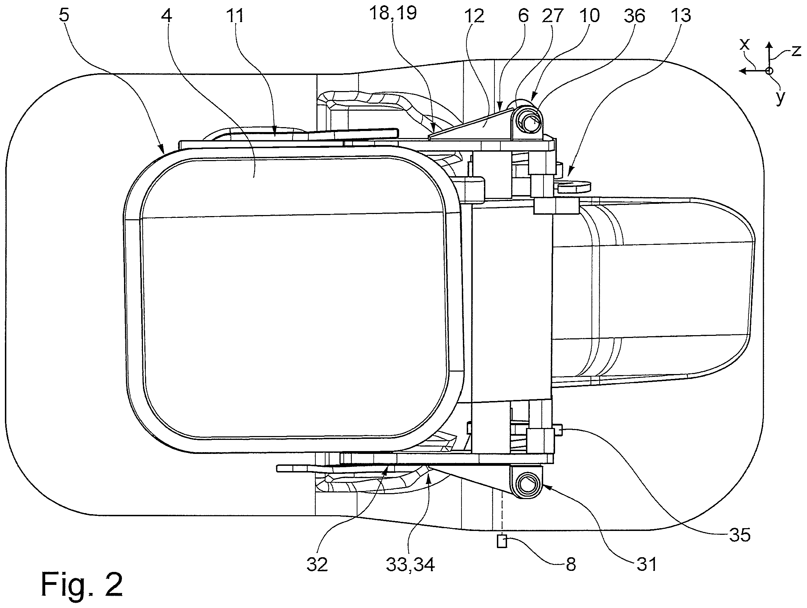

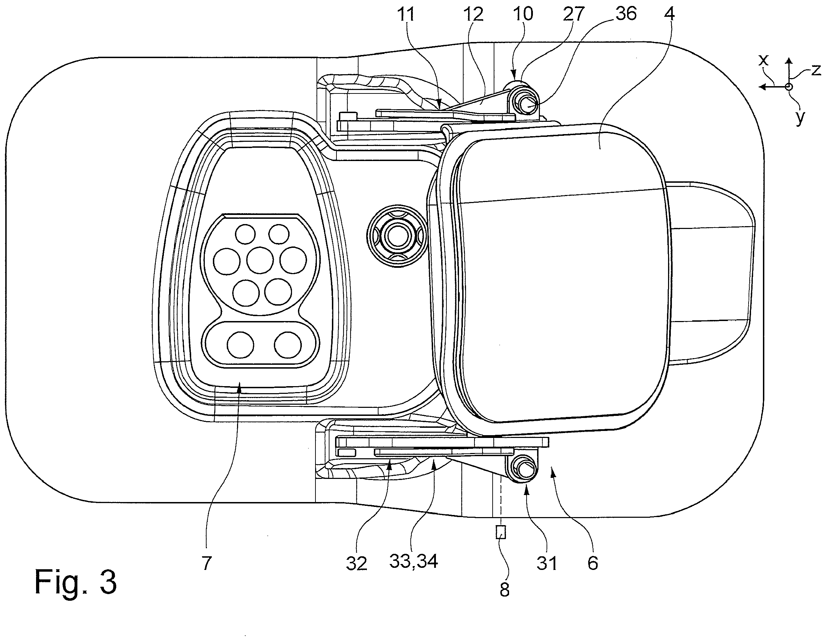

In Fig. 2 ist ein in Fig. 1 gekennzeichneter Bereich II näher ersichtlich, der die Fahrzeugklappe 4 umfasst. Dabei ist die Fahrzeugklappe 4 in Fig. 2 in einem Betriebszustand dargestellt, in dem die Öffnung 5 vollständig von der Fahrzeugklappe 4 verschlossen ist. Zusätzlich zeigt Fig. 3 eine der Fig. 2 entsprechende Darstellung der Fahrzeugklappe 4 in einem Betriebszustand, in dem die Öffnung 5 vollständig von der Fahrzeugklappe 4 freigegeben ist. Dabei ist die Fahrzeugklappe in Fahrzeuglängsrichtung x innerhalb der Fahrzeugkarosserie 2 zur Seite verschwenkt, so dass eine Ladedose 7, die ein elektrisches Koppelelement zum Beladen eines elektrischen Energiespeichers des Fahrzeuges 1 darstellt, zugänglich ist.

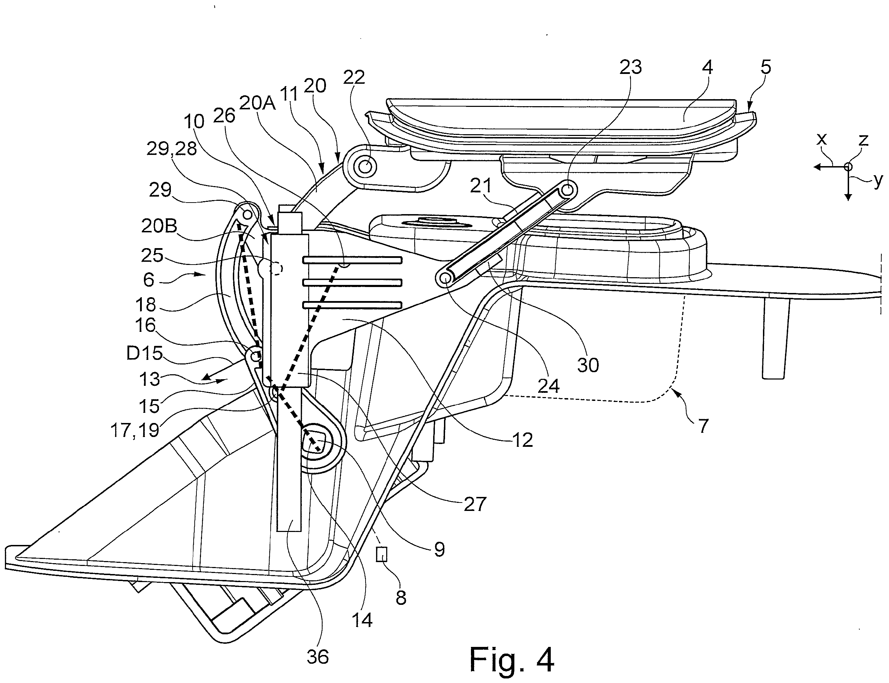

Fig. 4 zeigt eine Seitenansicht einer Antriebsvorrichtung 6 zum Öffnen und Schließen der Fahrzeugklappe 4, wobei ein Gehäuse der Ladedose 7 nur symbolisch strichliert dargestellt ist.

Die Antriebsvorrichtung 6 umfasst eine Antriebseinheit 8, die als ein herkömmlicher Elektromotor ausgeführt sein kann. Eine Antriebswelle der Antriebseinheit 8 steht mit einer Koppelwelle 9 in Wirkverbindung, um ein Antriebsmoment der Antriebseinheit 8 auf die Koppelwelle 9 übertragen zu können. Dabei besteht die Möglichkeit, dass die Antriebswelle der Antriebseinheit 8 und die Koppelwelle 9 koaxial zueinander angeordnet sind bzw. einstückig miteinander ausgeführt sind. Des Weiteren besteht auch die Möglichkeit, dass die Antriebseinheit 8 räumlich versetzt zur Koppelwelle 9 im Fahrzeug 1 positioniert ist und über entsprechende Koppelelemente, wie Zahnräder, Riemen oder dergleichen, mit der Koppelwelle 9 antriebstechnisch in Wirkverbindung steht.

Darüber hinaus ist die Antriebsvorrichtung 6 mit einer Linearführung 10 und einem hier als Viergelenk ausgebildeten Drehgelenkmechanismus 11 ausgeführt, die in der nachfolgend näher beschriebenen Art und Weise miteinander in Wirkverbindung stehen. Mittels der Linearführung 10 und dem Drehgelenkmechanismus bzw. Viergelenk 11 ist der rotatorische Antrieb der Antriebseinheit 8 derart wandelbar, dass die nach innen öffnende Fahrzeugklappe 4 während des Öffnungsvorganges zunächst eine Hubbewegung wenigstens annähernd in Fahrzeugquerrichtung y nach innen und anschließend eine kombinierte Verschiebe- und Drehbewegung innerhalb der Fahrzeugkarosserie 2 ausführt. Dabei sind das Viergelenk 11 und ein fahrzeugkarosserieseitig längsverschieblich geführter Schlitten 12 der Linearführung 10 zusätzlich über eine Hebelanordnung 13 mit der Koppelwelle 9 verbunden und von der Antriebseinheit 8 antreibbar.

Die Hebelanordnung 13 umfasst einen um eine stationäre Drehachse 14 verschwenkbaren Antriebshebel 15, die gleichzeitig die Achse der Koppelwelle 9 ist. Der Antriebshebel 15 ist drehfest mit der Koppelwelle 9 verbunden und von der Antriebseinheit 8 rotatorisch antreibbar. Dabei ist der Antriebshebel 15 in Koppelbereichen 16, 17, die von der Drehachse 14 beabstandet sind, mit Koppelhebeln 18, 19 drehbar verbunden. Der Koppelbereich 17 des Koppelhebels 19 ist in Längsrichtung des Antriebshebels 15 zwischen dem Koppelbereich 16 des Koppelhebels 18 und der Drehachse 14 positioniert. Die Koppelhebel 18 und 19 sind zusätzlich drehbar mit dem Schlitten 12 der Linearführung 10 wirkverbunden, wobei der Koppelhebel 19 mit einer als Drehgelenk ausgebildeten Koppelstelle 26 drehbar am Schlitten 12 angebunden ist.

Der Schlitten 12 und die Fahrzeugklappe 4 stehen über zwei Gelenkhebel 20, 21 des Viergelenks 11 miteinander in Wirkverbindung. Die Gelenkhebel 20, 21 sind sowohl mit dem Schlitten 12 als auch mit der Fahrzeugklappe 4 drehbar verbunden. Dabei ist der erste Gelenkhebel 20 im Bereich einer Koppelstelle 22, die ein Drehgelenk umfasst, drehbar an der Fahrzeugklappe 4 angebunden und mit einer weiteren nur symbolisch angedeuteten und als Drehgelenk ausgebildeten Koppelstelle 25 mit dem Schlitten 12 verbunden. Der weitere Gelenkhebel 21 des Viergelenks 11 ist im Bereich einer Koppelstelle 23, die ebenfalls ein Drehgelenk umfasst, drehbar mit der Fahrzeugklappe 4 verbunden und darüber hinaus im Bereich einer weiteren als Drehgelenk ausgebildeten Koppelstelle 24 drehbar am Schlitten 12 angebunden.

Der Schlitten 12 ist entlang einer Führungsstange 36 längsverschieblich geführt, die in Einbaulage der Antriebsvorrichtung 6 in der Fahrzeugkarosserie 2 im Wesentlichen senkrecht zum Öffnungsquerschnitt der Öffnung 5 verlaufend angeordnet ist. Hierfür ist der Schlitten 12 mit einer zylindrischen Hülse 27 ausgebildet, die die Führungsstange 36 umgreift.

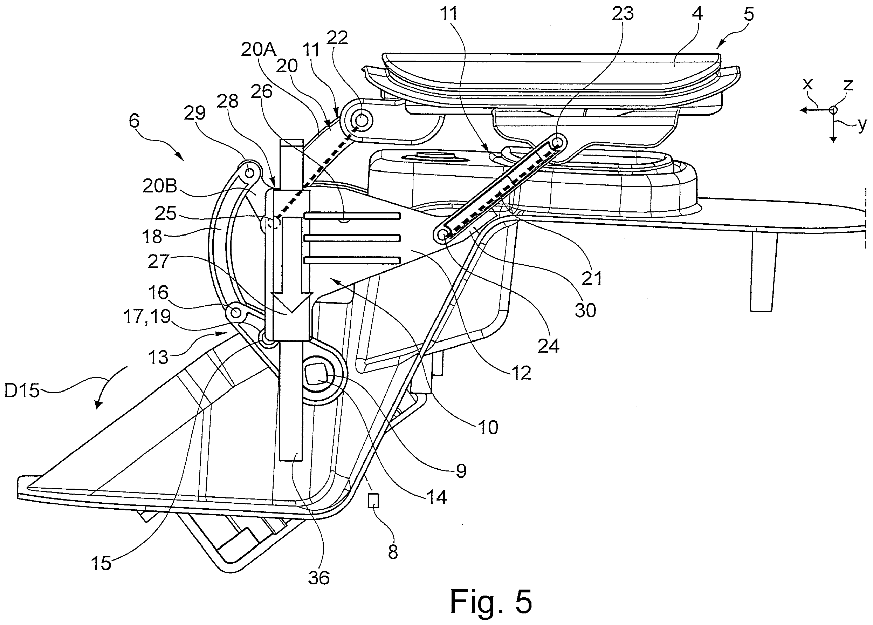

Der erste Gelenkhebel 20 des Viergelenks 11 ist vorliegend annähernd in der Form eines spiegelverkehrten "L" ausgeführt und umfasst einen ersten Schenkel bzw. Gelenkhebelabschnitt 20A und einen besonders deutlich in Fig. 5 ersichtlichen zweiten Schenkel bzw. Gelenkhebelabschnitt 20B. Im Verbindungsbereich 28 zwischen den Gelenkhebelabschnitten 20A, 20B ist der Gelenkhebel 20 drehbar mit dem Schlitten 12 verbunden. Zudem ist der Gelenkhebel 20 in Koppelbereichen 22 und 29, die jeweils vom Verbindungsbereich 28 beabstandet sind, mit dem ersten Koppelhebel 18 und mit der Fahrzeugklappe 4 drehbar verbunden.

Der Antriebshebel 15, die Koppelhebel 18, 19, die Gelenkhebel 20, 21 des Viergelenks 11 und die Abstände zwischen den Koppelstellen 16, 17, 22, 23, 24, 25, 26 und 29 zwischen dem Antriebshebel 15, den Koppelhebeln 18, 19, den Gelenkhebeln 20, 21, dem Schlitten 12 und der Fahrzeugklappe 4 sind dazu eingerichtet, dass die Fahrzeugklappe 4 während einer Schwenkbewegung des Antriebshebels 15 innerhalb eines Schwenkwinkelbereiches gegenüber der Fahrzeugkarosserie 2 mit dem Schlitten 12 eine Hubbewegung in Fahrzeugquerrichtung y ausführt, die die Fahrzeugklappe 4 aus der in Fig. 4 gezeigten Stellung in die in Fig. 5 gezeigte Stellung überführt. In dieser Position ist die Fahrzeugklappe 4 in Bezug auf eine Außenseite der Fahrzeugkarosserie 2 in Fahrzeugquerrichtung y nach innen von der Öffnung 5 translatorisch wegbewegt.

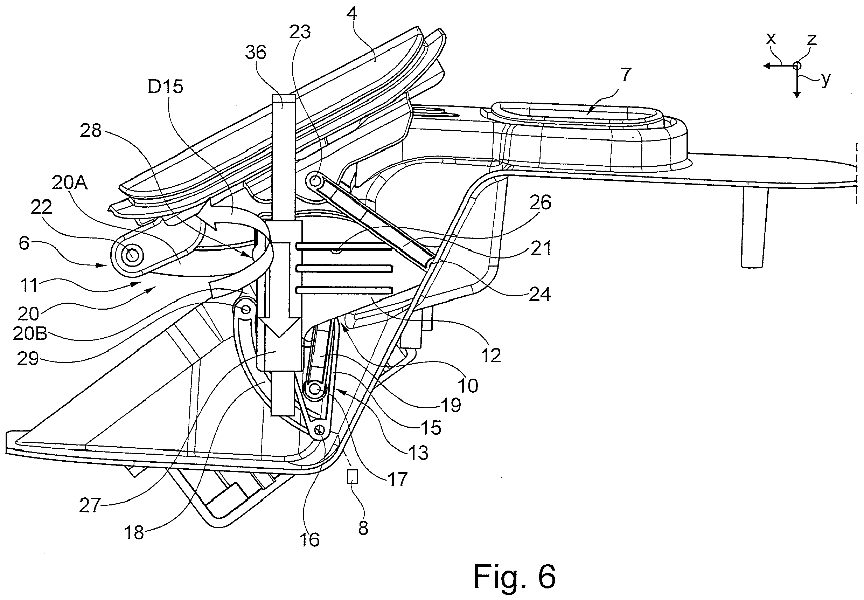

Zusätzlich sind die letztgenannten Bauteile 18, 19, 20, 21 und Abstände zwischen den Koppelstellen 16, 17, 22, 23, 24, 25, 26 und 29 dazu eingerichtet, dass die Fahrzeugklappe 4 innerhalb eines sich an den Schwenkwinkelbereich anschließenden weiteren Schwenkwinkelbereiches des Antriebshebels 15 gegenüber der Fahrzeugkarosserie 2 mittels der kombinierten Verschiebe- und Drehbewegung aus der in Fig. 5 gezeigten Position in die in Fig. 6 dargestellte Öffnungsstellung überführt wird. Die Schwenkrichtung bzw. Drehrichtung des Antriebshebels 15 ist dabei in Fig. 5 und Fig. 6 jeweils unter dem Bezugszeichen D15 näher angegeben. Dabei wird die Fahrzeugklappe 4 zusammen mit dem Schlitten 12 in Fahrzeugquerrichtung y nach inne verschoben und gleichzeitig von den Gelenkhebeln 20, 21 des Drehgelenkmechanismus um die Koppelstellen 24, 29 verschwenkt.

Um die Fahrzeugklappe 4 aus der in Fig. 6 dargestellten Öffnungsstellung in die in Fig. 4 gezeigte Schließstellung zu überführen, wird der Antriebshebel 15 entgegen der Drehrichtung D15 aus der in Fig. 6 gezeigten Schwenkstellung in die in Fig. 4 gezeigte Schwenkstellung zurück verschoben und zurück verschwenkt. Dabei wird die Fahrzeugklappe 4 zunächst über die kombinierte Verschiebe- und Drehbewegung aus der in Fig. 6 gezeigten Öffnungsposition in die in Fig. 5 gezeigte Zwischenstellung überführt.

Wenn die Fahrzeugklappe 4 die Zwischenstellung gemäß Fig. 5 erreicht, kommt auch der Gelenkhebel 21 des Viergelenks 11 an einem Anschlag 30 des Schlittens 12 zum Anliegen, der eine weitere Schwenkbewegung des Gelenkhebels 21 um die weitere Koppelstelle 24 gegenüber dem Schlitten 12 verhindert. Dadurch wird erreicht, dass eine weitere Rotation des Antriebshebels 15 um die Drehachse 14 entgegen der Drehrichtung D15 auch den Gelenkhebel 21 nicht mehr gegenüber dem Schlitten 12 verschwenken kann. Dies führt dazu, dass der Schlitten 12 zusammen mit dem Viergelenk 11 und der Fahrzeugklappe 4 durch eine weitere Schwenkbewegung des Antriebshebels 15 entgegen der Drehrichtung D15 in Fahrzeugquerrichtung y nach außen in Richtung der Fahrzeugkarosserie 2 translatorisch verschoben wird und die Öffnung 5 vollständig durch die Fahrzeugklappe 4 verschlossen wird.

Um ein Verschwenken des ersten Gelenkhebels 20 und des weiteren Gelenkhebels 21 des Viergelenks 11 während der Hubbewegung der Fahrzeugklappe 4 ausgehend aus der Schließstellung der Fahrzeugklappe 4 zu vermeiden, kann ein in der Zeichnung nicht näher dargestellter karosserieseitiger Anschlag vorgesehen sein. Der Anschlag wirkt mit dem L-förmigen Gelenkhebel 20 solange zusammen, bis die Fahrzeugklappe 4 so weit von der Fahrzeugkarosserie 2 nach innen verfahren ist, dass die Fahrzeugklappe 4 anschließend über die kombinierte Verschiebe- und Drehbewegung aus der in Fig. 5 gezeigten Zwischenposition in die in Fig. 6 gezeigte Offenstellung überführbar ist, ohne dass die Fahrzeugklappe 4 mit der Fahrzeugkarosserie 2 kollidiert. Das bedeutet auch, dass der Gelenkhebel 20 am Ende der Hubbewegung der Fahrzeugklappe 4 und damit auch der linearen Verstellung des Schlittens 12 sowie des Viergelenks 11 aus dem Eingriff mit dem Anschlag geführt ist. Dann wird der Gelenkhebel 20 bei einer Verschwenkung des Antriebshebels 15 in die Drehrichtung D15 gegenüber dem Schlitten 12 verdreht und die Fahrzeugklappe 4 in die Offenstellung gemäß Fig. 6 überführt.

Aus den Darstellungen gemäß Fig. 2 und Fig. 3 geht hervor, dass das in der Zeichnung dargestellte Ausführungsbeispiel der Antriebsvorrichtung 6 neben der Linearführung 10, dem Drehgelenkmechanismus bzw. Viergelenk 11, den Koppelhebeln 18, 19 und dem Antriebshebel 15 auf der gegenüberliegenden Seite der Ladedose 7 eine weitere Linearführung 31, ein weiteres Viergelenk 32, weitere Koppelhebel 33, 34 und einen zusätzlichen Antriebshebel 35 aufweist, deren konstruktive Ausführungen sowie Funktionen jeweils den konstruktiven Ausgestaltungen und Funktionen der Linearführung 10, des Viergelenks 11, der Koppelhebel 18, 19 und des Antriebshebels 15 entsprechen.

### BEZUGSZEICHENLISTE

- 1: Fahrzeug
- 2: Fahrzeugkarosserie
- 3: Antriebseinrichtung
- 4: Fahrzeugklappe
- 5: Öffnung
- 6: Antriebsvorrichtung
- 7: Ladedose
- 8: Antriebseinheit
- 9: Koppelwelle
- 10: Linearführung
- 11: Drehgelenkmechanismus, Viergelenk
- 12: Schlitten
- 13: Hebelanordnung
- 14: stationäre Drehachse
- 15: Antriebshebel
- 16: Koppelbereich zwischen dem Antriebshebel und dem Koppelhebel 18
- 17: Koppelbereich zwischen dem Antriebshebel und dem Koppelhebel 19
- 18: Koppelhebel
- 19: Koppelhebel
- 20: Gelenkhebel
- 20A: Gelenkhebelabschnitt
- 20B: Gelenkhebelabschnitt
- 21: Gelenkhebel
- 22: Koppelstelle
- 23: Koppelstelle
- 24: Koppelstelle
- 25: Koppelstelle
- 26: Koppelstelle
- 27: zylindrische Hülse des Schlittens
- 28: Verbindungsbereich der Gelenkhebelabschnitte
- 29: Koppelstelle
- 30: Anschlag des Schlittens
- 31: weitere Linearführung
- 32: weiteres Viergelenk
- 33, 34: weitere Koppelhebel
- 35: zusätzliche Antriebshebel
- 36: Führungsstange

- D15: Schwenkrichtung des Antriebshebels 15
- x: Fahrzeuglängsrichtung
- y: Fahrzeugquerrichtung
- z: Fahrzeughochrichtung

## Patentansprüche

1. Antriebsvorrichtung (6) für eine Fahrzeugklappe (4), mittels der eine Öffnung (5) einer Fahrzeugkarosserie (2) verschließ- und freigebbar ist, wobei die Fahrzeugklappe (4) in Einbaulage der Antriebsvorrichtung (6) während einer Verstellung aus einer die Öffnung (5) verschließenden Position in Richtung einer die Öffnung (5) freigebenden Position zunächst eine Hubbewegung in Fahrzeugquerrichtung (y) nach innen und anschließend eine kombinierte Verschiebe- und Drehbewegung innerhalb der Fahrzeugkarosserie (2) ausführt,
**dadurch gekennzeichnet, dass** die nach innen öffnende Fahrzeugklappe (4) mittels einer Kombination aus einem Drehgelenkmechanismus (11) und einer Linearführung (10) verstellbar ist, wobei der Drehgelenkmechanismus (11) und ein Schlitten (12) der Linearführung (10) über eine Hebelanordnung (13) von einer Antriebseinheit (8) antreibbar sind.

2. Antriebsvorrichtung nach Anspruch 1,
**dadurch gekennzeichnet, dass** die Hebelanordnung (13) zumindest einen um eine stationäre Drehachse (14) verschwenkbaren Antriebshebel (15) umfasst, der in Koppelbereichen (16, 17), die von der Drehachse (14) beabstandet sind, mit wenigstens zwei Koppelhebeln (18, 19) der Hebelanordnung (13) drehbar verbunden ist, wobei die Koppelhebel (18, 19) drehbar mit dem fahrzeugkarosserieseitig längsverschieblich geführten Schlitten (12) in Wirkverbindung stehen.

3. Antriebsvorrichtung nach Anspruch 1 oder 2,
**dadurch gekennzeichnet, dass** der Schlitten (12) und die Fahrzeugklappe (4) über zwei Gelenkhebel (20, 21) des Drehgelenkmechanismus (11) miteinander in Wirkverbindung stehen, die sowohl mit dem Schlitten (12) als auch mit der Fahrzeugklappe (4) drehbar verbunden sind.

4. Antriebsvorrichtung nach Anspruch 2 und 3,
**dadurch gekennzeichnet, dass** der Antriebshebel (15) die Koppelhebel (18, 19, 33, 34), die Gelenkhebel (20, 21) und Abstände zwischen Koppelstellen (16, 17, 22, 23, 24, 25, 26, 29) zwischen dem Antriebshebel (15), den Koppelhebeln (18, 19), den Gelenkhebeln (20, 21), dem Schlitten (12) und der Fahrzeugklappe (4) dazu eingerichtet sind, dass die Fahrzeugklappe (4) während einer Schwenkbewegung des Antriebshebels (15) innerhalb eines Schwenkwinkelbereiches gegenüber der Fahrzeugkarosserie (2) mit dem Schlitten (12) die Hubbewegung ausführt und dass die Fahrzeugklappe (4) innerhalb eines sich an den Schwenkwinkelbereich anschließenden weiteren Schwenkwinkelbereiches des Antriebshebels (15) gegenüber der Fahrzeugkarosserie (2) mittels der kombinierten Verschiebe- und Drehbewegung verstellt wird.

5. Antriebsvorrichtung nach wenigstens einem der vorstehenden Ansprüche, **dadurch gekennzeichnet, dass** der Schlitten (12) entlang einer Führungsstange (36) längsverschieblich geführt ist, die in Einbaulage der Antriebsvorrichtung (6) in der Fahrzeugkarosserie (2) im Wesentlichen senkrecht zum Öffnungsquerschnitt der Öffnung (5) verlaufend angeordnet ist.

6. Antriebsvorrichtung nach wenigstens einem der Ansprüche 3 bis 5,
**dadurch gekennzeichnet, dass** die Gelenkhebel (20, 21) jeweils im Bereich eines Drehgelenkes mit der Fahrzeugklappe (4) und mit dem Schlitten (12) verbunden sind.

7. Antriebsvorrichtung nach wenigstens einem der Ansprüche 3 bis 6,
**dadurch gekennzeichnet, dass** einer der Gelenkhebel (20) wenigstens annähernd L-förmig ausgeführt ist, einen ersten Gelenkhebelabschnitt (20A) und einen zweiten Gelenkhebelabschnitt (20B) aufweist, in einem Verbindungsbereich (28) zwischen den Gelenkhebelabschnitten (20A, 20B) drehbar mit dem Schlitten (12) verbunden ist und in Koppelbereichen (29, 22) der Gelenkhebelabschnitte (20A, 20B), die jeweils vom Verbindungsbereich (28) beabstandet sind, mit dem ersten Koppelhebel (18) und mit der Fahrzeugklappe (4) drehbar verbunden ist.

8. Antriebsvorrichtung nach wenigstens einem der Ansprüche 3 bis 7,
**dadurch gekennzeichnet, dass** die Drehbewegung der Fahrzeugklappe (4) in Richtung der Position, in der die Fahrzeugklappe (4) die Öffnung (5) verschließt, durch einen Anschlag (30) des Schlittens (12) begrenzt ist, wobei der Anschlag (30) mit einem der Gelenkhebel (21) zusammenwirkt.

9. Antriebsvorrichtung nach wenigstens einem der vorstehenden Ansprüche, **dadurch gekennzeichnet, dass** die Drehbewegung der Fahrzeugklappe (4) in Richtung der Position, in der die Fahrzeugklappe die Öffnung freigibt, durch einen weiteren Anschlag des Schlittens (12) freigegeben wird, wenn die Fahrzeugklappe (4) und der Schlitten (12) über einen definierten Hubweg aus der Position, in der die Fahrzeugklappe (4) die Öffnung (5) verschließt, verstellt ist.

10. Antriebsvorrichtung nach wenigstens einem der Ansprüche 5 bis 9, **dadurch gekennzeichnet, dass** der Schlitten (12) eine zylindrische Hülse (27) umfasst, die die Führungsstange (36) umgreift.

11. Antriebsvorrichtung nach wenigstens einem der Ansprüche 3 bis 10, **dadurch gekennzeichnet, dass** der Drehgelenkmechanismus (11) mit den Gelenkhebeln (20, 21) als ein Viergelenk ausgebildet ist.
